# EUROPEAN PATENT SPECIFICATION

(11) **EP 4 054 857 B1**
(45) Date of publication and mention of the grant of the patent: **18.10.2023**
(21) Application number: 20816588.6
(22) Date of filing: 05.11.2020
(51) Int. Cl.: B60C 7/10, B60B 9/26, B60C 7/18, B60C 7/08, B60C 7/14

(54) **SUPPORTING WHEEL FOR MOTOR VEHICLES**
STÜTZRAD FÜR MOTORFAHRZEUGE
ROUE DE SUPPORT POUR VÉHICULE À MOTEUR

(30) Priority: 05.11.2019 IT 201900020436; 18.03.2020 IT 202000005809
(43) Date of publication of application: 14.09.2022
(73) Proprietor: Modenatech S.r.l., 41122 Modena (MO) (IT)
(72) Inventor: GUALTIERI, William, 41122 Modena (MO) (IT)
(74) Representative: Brunacci, Marco
(86) International application number: PCT/IB2020/060411
(87) International publication number: WO 2021/090227

(56) References cited:
- EP-A1- 1 894 748
- EP-A1- 3 275 696
- CN-U- 208 035 858
- JP-A- 2013 039 922
- US-A- 6 142 203
- US-A1- 2010 132 858
- US-A1- 2011 146 872
- US-A1- 2018 065 414
- US-A1- 2019 001 744

## Description

### Technical Field

The present invention relates to a supporting wheel for motor vehicles.

### Background Art

In the remainder of the present treatise and in the subsequent claims, a supporting wheel is a wheel that can be attached to a motor vehicle, preferably a motor vehicle under repair, intended to allow small movements inside closed environments such as e.g. workshops or body shops.

In addition, in the remainder of the present treatise, the term motor vehicle is preferably referred to, without being limited to, a motor vehicle.

Generally, the repair of damaged rims that need to be straightened and/or rectified involves removing these from the motor vehicle.

In the face of this situation, the motor vehicles are positioned on special supporting posts arranged inside workshops and body shops.

This solution does however have many drawbacks, including the fact that, after the vehicle has been positioned above the supporting posts, the vehicle remains immobilized there without being able to be moved inside the workshop or body shop.

It is easy to understand that such a solution leads to huge waste of space, as it is not possible to optimize the management of the latter by moving the motor vehicles under repair according to the needs of the operators.

To alleviate at least some of the above mentioned drawbacks, supporting wheels made of metal material and provided with an outer rolling surface made of polymeric material of the type of rubber or the like have been developed.

These supporting wheels are manufactured in a single monolithic body with a central portion that, in the configuration of normal use, is associated with the hub of the motor vehicle.

However, even this solution is not without its drawbacks.

In fact, the central portion is subject to breakage thus determining the need to replace the entire supporting wheel and significantly increasing the costs of maintenance and replacement of the wheel itself.

The present invention relates to a wheel for motor vehicles having structural and functional characteristics such as to satisfy the above mentioned requirements and at the same time to overcome the mentioned drawbacks with reference to the prior art.

Other wheels for motor vehicles are known from US 2011/146872 A1, EP 3 275 696 A1, US 6 142 203 A, US 2010/132858 A1, US 2018/065414 A1, JP 2013 039922 A, US 2019/001744 A1, EP 1 894 748 A1, CN 208 035 858 U.

### Description of the Invention

The main aim of the present invention is to devise a supporting wheel for motor vehicles that has improved strength compared to the supporting wheels of known type.

Another object of the present invention is to devise a supporting wheel for motor vehicles that will significantly reduce the costs of maintenance and replacement of the wheel itself.

A further object of the present invention is to devise a supporting wheel for motor vehicles that allows overcoming the above mentioned drawbacks of the prior art in a simple, rational, easy, effective to use and affordable solution. The objects set out above are achieved by the present supporting wheel for motor vehicles having the characteristics of claim 1.

### Brief Description of the Drawings

Other characteristics and advantages of the present invention will be more evident from the description of a preferred, but not exclusive, embodiment of a supporting wheel for motor vehicles, illustrated by way of an indicative, yet non-limiting example, in the attached tables of drawings in which:
Figure 1 is an axonometric view of the wheel according to the invention in a first embodiment;
Figure 2 is an exploded view of the wheel in Figure 1;
Figure 3 is a schematic representation of the wheel in Figure 1 during assembly;
Figure 4 is an axonometric view of the wheel according to the invention in a second embodiment;
Figure 5 is an exploded view of the wheel in Figure 4;
Figure 6 is an exploded view of the wheel according to the invention in accordance with an alternative embodiment;
Figure 7 is a schematic representation of the wheel in Figure 4 during the
assembly phase.

### Embodiments of the Invention

With particular reference to these figures, reference numeral 1 globally indicates a supporting wheel for motor vehicles, particularly for motor vehicles under repair.

The term "motor vehicles under repair" relates to the condition in which the rims are removed from the hub and, in order to allow small movements inside closed environments such as e.g. workshops or body shops, the wheel 1 is then attached.

It is specified that, for non-limiting purposes, the term "motor vehicle" means a generic motor vehicle with two, three, four, six or eight wheels.

Preferably, the term "motor vehicle" relates to a motor vehicle, i.e. any vehicle with its own motor, with at least four wheels, adapted to run on ordinary roads regardless of fixed installations such as e.g. tracks, overhead power lines.

The wheel 1 comprises a load-bearing structure 2, which in turn comprises an outer rolling surface 3 and two opposite side walls 4, 5 which extend on parallel planes and between which there is at least one through hole 6.

The two side walls 4, 5 comprise a first side wall 4 and a second side wall 5.

It is useful to point out that in the present treatise the terms "side", "laterally" and the like are to be understood with reference to an operational configuration wherein the wheel 1 is operable in rotation around a central axis C by sliding contact of the outer rolling surface 3 with the ground.

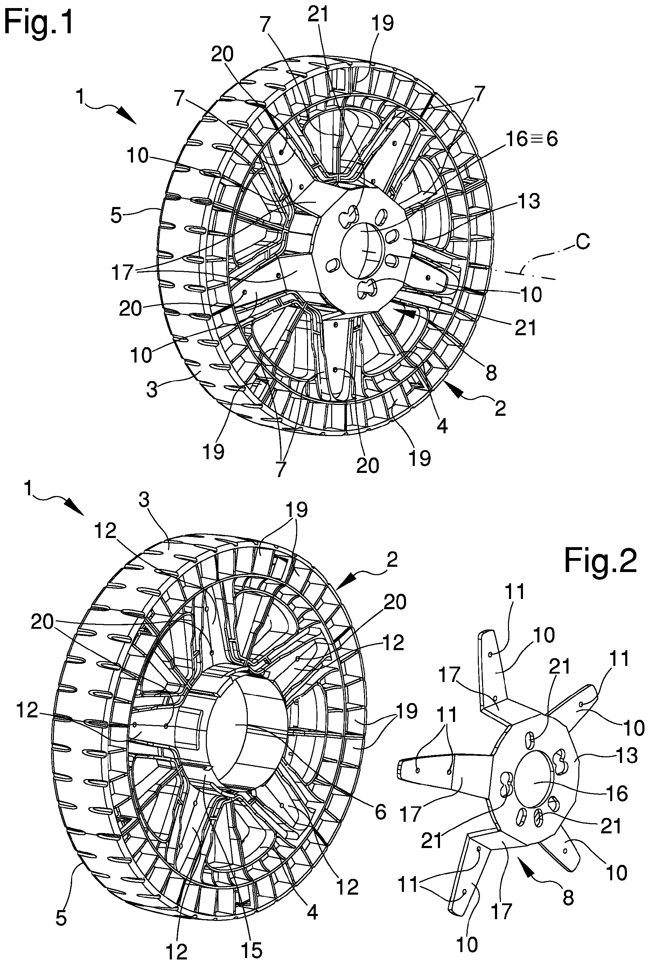

In fact, as shown in Figure 1, the central axis C is horizontal and the wheel 1 is movable along a direction of forward movement substantially parallel to the ground.

According to a first embodiment of the wheel 1 according to the invention (Figures 1-3), the outer rolling surface 3 is made on the load-bearing structure 2 and is of the rigid type.

It cannot however be ruled out from the scope of the present treatise that the outer rolling surface 3 is co-molded onto the load-bearing structure 2 or, alternatively, comprises a tyre of the tubeless type, an inner tube of a type known to the industry technician.

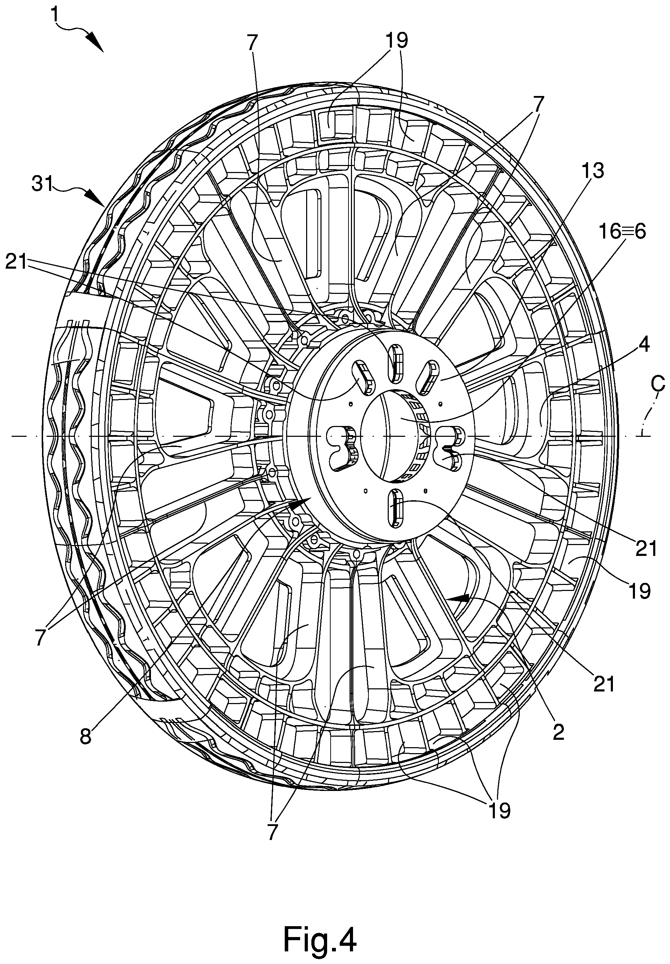

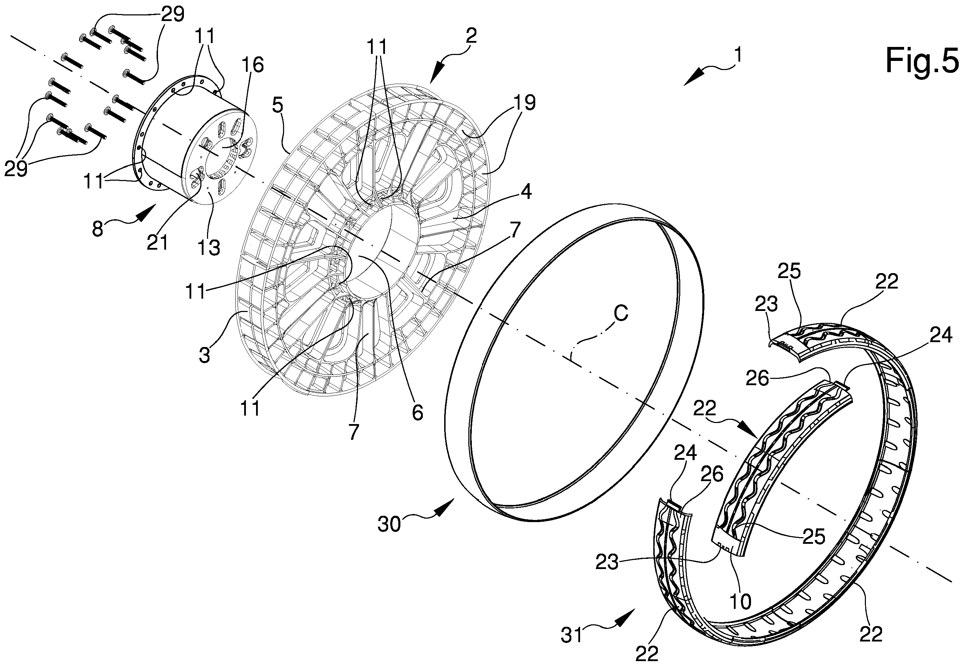

Alternatively, according to a second embodiment of the wheel 1 (Figures 4 and 5), the latter comprises a first tyre element 30 associated with the outer rolling surface 3.

It is specified that the term "tyre element" in the present treatise relates to a protection casing of the outer rolling surface 3 without an inner tube. Preferably, the first tyre element 30 is co-molded on the outer rolling surface 3. It cannot however be ruled out from the scope of the present treatise that the first tyre element 30 is glued to the outer rolling surface 3.

In order to further strengthen the first tyre element 30, the wheel 1 comprises a second tyre element 31 associated with the first tyre element 30.

In detail, the first tyre element 30 and the second tyre element 31 are made at least partly of a polymeric material.

Preferably, the above mentioned polymeric material is selected from the list comprising: Polyamide 6 and TPV.

As shown in Figure 5, the second tyre element 31 comprises a plurality of portions 22 having an elongated conformation with predefined angular extension and configured to be associated adjacent to each other by interposition of union means 23, 24 to cover the first tyre element 30.

It is specified that, in the present treatise, the term "angular extension" means the length of each portion 22 expressed in sexagesimal degrees around the central axis C.

For example, with reference to the Figure 5, the second tyre element 31 comprises four portions 22 having an angular extension equal to 90°.

It cannot however be ruled out from the scope of the present treatise that the second tyre element 31 comprises two, three, five, six, etc. portions 22 having angular extension equal to 180°, 120°, 72° and 60°, respectively.

It cannot also be ruled out that the second tyre element 31 is made of a monolithic single piece.

The union means 23, 24 comprise an interlocking seat 23 made on a first end 25 of the portions 22 and an interlocking tooth 24 associated with a second end 26 opposite the first end 25 and configured to fit in the interlocking seat 23, the union means 23, 24 are configured to join flush the respective outer surfaces of the portions 22.

This means that the interlocking tooth 24 is adapted to fit in the interlocking seat 23 to size, allowing each portion 22 to be kept adjacent to the other to define a continuous outer surface.

In other words, the interlocking tooth 24 is configured to fit in the interlocking seat 23 and to lie below the portion 22, thus ensuring the continuity of the outer surface of the second tyre element 31.

To this end, it should be underlined that the interlocking seat 23 is made on a stretch of the portion 22 which is lowered than the latter. This way, when the interlocking tooth 24 fits in the respective interlocking seat 23, the outer surfaces of each portion 22 are joined together flush.

Furthermore, it should be noted that the special solution of providing the second tyre element 31 comprising a plurality of portions 22 allows the replacement of the same in case of wear or breakage of a single portion 22.

This way, material waste and maintenance costs of the wheel 1 are greatly reduced. In fact, if only one portion 22 is worn or damaged, it may be replaced, avoiding the replacement of the whole tread.

Preferably, the second tyre element 31 is associated with the first tyre element 30 by interlocking, the second tyre element 31 is shaped to abut against the first tyre element 30.

In other words, the second tyre element 31 is provided with interlocking edges, not shown in detail in the figures, adapted to allow the coupling and clamping thereof to size on the first tyre element 30.

It cannot however be ruled out that the second tyre element 31 is associated with the first tyre element 30 by interposition of adhesive means.

Preferably, the adhesive means comprise two-component glue or a layer of double-sided adhesive tape.

According to the invention, the load-bearing structure 2 is made at least partly of plastic material.

It cannot be ruled out from the scope of the present treatise that the load-bearing structure 2 is entirely made of plastic material.

The plastic material is selected from the list comprising polyamide 6. Advantageously, the load-bearing structure 2 comprises a plurality of spokes 7 arranged equidistant from each other.

In addition, the wheel 1 comprises a central reinforcement body 8 intended to be coupled to the hub M of a motor vehicle 9 and associated with the load-bearing structure 2.

Advantageously, the central reinforcement body 8 is made at least partly of metal material.

It cannot be ruled out from the scope of the present treatise that the central reinforcement body 8 is entirely made of metal material.

It should be noted that the term "metal material" relates, for example, to materials such as aluminum, low or high carbon steel, steel, alloy steel, cast iron alloy, magnesium alloy, carbon fiber.

According to the first embodiment shown in Figures 1-3, the central reinforcement body 8 is associated with the load-bearing structure 2 and abuts against one of either the first side wall 4 or the second side wall 5.

With reference to the particular embodiment solution shown in Figures 1-3, the central reinforcement body 8 abuts against the first side wall 4.

In addition, according to the first embodiment, the central reinforcement body 8 comprises a plurality of reinforcement elements 10 having an elongated shape and associated with the load-bearing structure 2 on at least one of the side walls 4,5.

The central reinforcement body 8 advantageously comprises five reinforcement elements 10 positioned equidistant from each other (i.e. 72° from each other). This allows an even distribution of the weight force exerted by the motor vehicle on the wheel 1.

It cannot however be ruled out from the scope of the present invention that the central reinforcement body 8 comprises two, three, four, six, eight, etc. reinforcement elements 10 arranged equidistant from each other (i.e. 180°, 120°, 90°, 60°, 45° etc.).

The presence of the reinforcement elements 10 allows stiffening the load-bearing structure 2 thus increasing the resistance thereof.

In detail, the reinforcement elements 10 are associated with one of the side walls 4, 5 by interposition of connection means 11.

The connection means 11 comprise a plurality of through holes made on each reinforcement element 10 and intended to accommodate respective union elements 29 of the type of screws or bolts.

In this regard, it is worth to specify that each reinforcement element 10 is accommodated inside respective housing grooves 12 cut out on the load-bearing structure 2.

In detail, each reinforcement element 10 is fixed inside the respective housing groove 12 by screwing the union elements into the respective holes 11 coinciding with the respective inner housing holes 20 made inside each housing groove 12.

As can be seen in the figures, the housing grooves 12 are made on the spokes 7 of the load-bearing structure 2.

Preferably, the reinforcement elements 10 are associated with one of the two side walls 4, 5.

In this case, the reinforcement elements 10 are associated with the first side wall 4.

It cannot however be ruled out from the scope of the present treatise that the reinforcement elements 10 are associated with both side walls 4, 5, i.e. they are associated with the first side wall 4 and with the second side wall 5.

According to the first embodiment of the wheel 1, the central reinforcement body 8 comprises a hollow clamping element 15 cylindrical in shape, associated with the through hole 6 and protruding overhanging from one of the side walls 4,5.

In detail, as shown in Figures 1-3, the clamping element 15 protrudes cantilevered from the first side wall 4.

According to the second embodiment shown in Figures 4 and 5, the central reinforcement body 8 has a cylindrical shape and is associated with the through hole 6 and projecting cantilevered from one of the side walls 4, 5.

In other words, in the second embodiment, the central reinforcement body 8 is without the reinforcement elements 10.

Advantageously, according to both embodiments of the wheel 1, the central reinforcement body 8 is locked together with the load-bearing structure 2 and the hub M can be fitted inside of it.

In detail, the central reinforcement body 8 and the load-bearing structure 2 can be manufactured in a monolithic single body or, alternatively, manufactured separately and then locked together.

In this last case, as shown in Figures 1-3 and 4, 5, the central reinforcement body 8 is associated with the load-bearing structure by interposition of connection means 29 of the type of screws, bolts and the like, accommodated in respective housing holes 11 made on the load-bearing structure 2 and on the central reinforcement body 8.

In the assembly configuration, the housing holes 11 made on the central reinforcement body 8 and on the load-bearing structure 2 coincide.

As shown in Figure 5, the housing holes 11 are made at the point where the second side wall 5 is located.

It cannot however be ruled out from the scope of the present treatise that the housing holes 11 are made at the point where the first side wall 4 is located.

In addition, according to the first and the second embodiment of the wheel 1, the central reinforcement body 8 comprises a coupling element 13 associated with the through hole 6.

Preferably, the coupling element 13 is circular in shape and is provided with a through duct 16 which, in the assembly configuration, is arranged coaxially to the through hole 6.

This way, the coupling element 13 is associated with the central reinforcement body 8 at the point where an extreme portion of the latter is located.

In this regard, the coupling element 13 abuts against the central reinforcement body 8; this means that the coupling element 13 is arranged to cover the through hole 6.

The coupling element 13 comprises a plurality of housing seats 21, each of them is intended to house a connecting element 14 for the union of the central reinforcement body 8 to the hub M.

The mutual distance of the housing seats 21 varies depending on the size of the wheel 1.

According to the first embodiment, the coupling element 13 is associated with the clamping element 15 at the point where an extreme portion of the latter is located.

In this regard, the coupling element 13 abuts against the clamping element 15; this means that the coupling element 13 is arranged to cover the through duct 16 and the reinforcement elements 10 are associated with the coupling element 13. In more detail, the reinforcement elements 10 are associated with the coupling element 13 by interposition of a connecting portion 17 which extends transversely to the coupling element 13.

This means that the coupling element 13, the connecting portion 17 and the reinforcement element 10 define a substantially Z-shaped profile.

As can be seen from Figures 1-3, the coupling element 13 and each reinforcement element 10 lie on substantially parallel planes and the connecting portion 17 lies on a substantially transverse plane thereto.

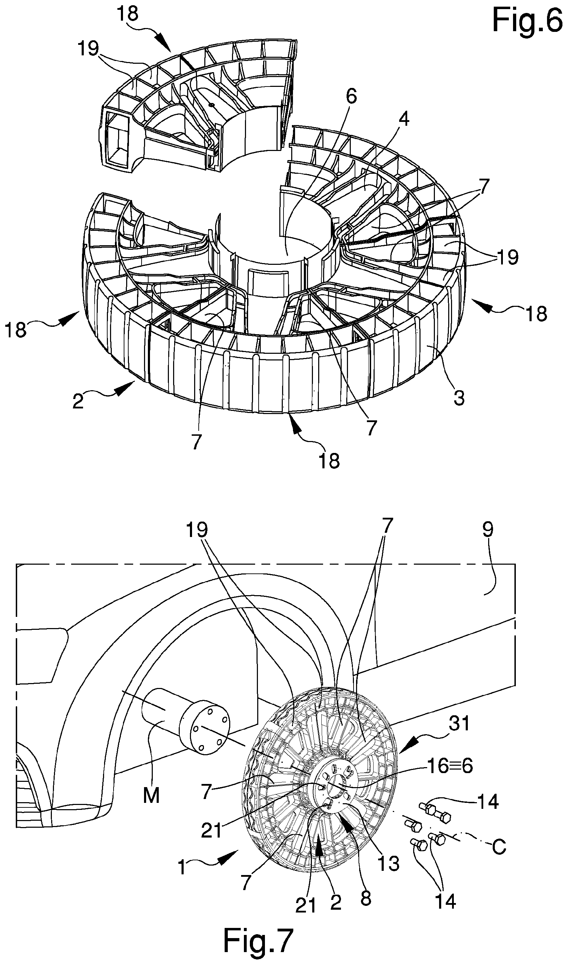

According to an alternative embodiment, shown in Figure 6, the load-bearing structure 2 comprises a plurality of angular portions 18 configured to be associated in a removable manner with the central reinforcement body 8.

The fact that the load-bearing structure 2 comprises a plurality of angular portions 18 allows the replacement thereof, in case of wear or breakage of the portion itself, avoiding the replacement of the entire wheel 1.

In this case, according to the second embodiment of the wheel 1, the portion 22 of the second tyre element 31 positioned at the point where the damaged angular portion 18 is located, is removed, leaving the first tyre element 30 accessible from the outside. Next, the first tyre element 30 is engraved at the point where the damaged angular portion 18 is located and the first tyre element is removed in order to replace the damaged angular portion. After the angular portion 18 has been replaced, the first tyre element 30 is restored by means of co-molding or casting techniques and then the corresponding portion 22 of the second tyre element 31 is relocated.

Each angular portion 18 has an angular extension that varies depending on the number of angular portions which are inside the load-bearing structure 2.

It is specified that in the present treatise the term "angular extension" means the length of each angular portion 18 expressed in sexagesimal degrees around the central axis C.

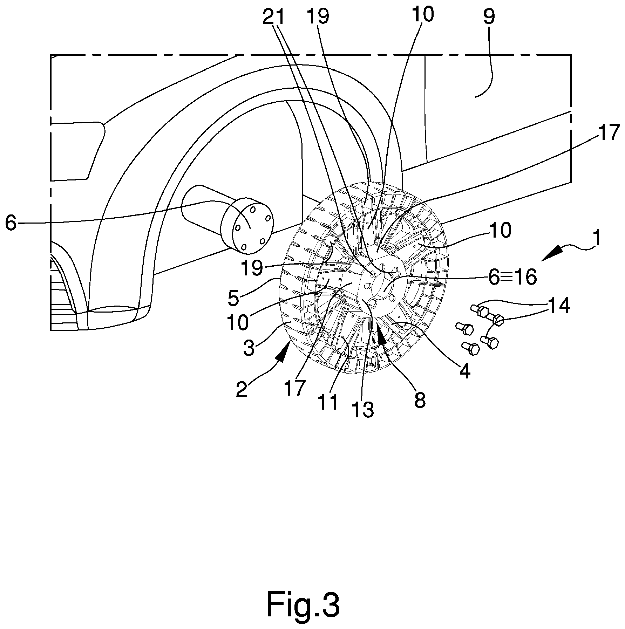

In this regard, with reference to the particular embodiment shown in Figure 3, the load-bearing structure 2 comprises five angular portions 18; this means that each angular portion 18 has an angular extension substantially equal to 72°.

It cannot however be ruled out from the scope of the present treatise that the load-bearing structure 2 comprises two, three, four, six, eight etc. angular portions 18; in this case, each angular portion 18 will have an angular extension substantially equal to 180°, 120°, 90°, 60°, 45° etc.

The presence of a plurality of angular portions 18 variable by number and angular extension allows reducing considerably the repair costs of the wheel 1, thus allowing the replacement of the single worn and/or broken portion.

In addition, with reference to the first embodiment of the wheel 1, each angular portion 18 comprises a housing groove 12.

It is, however, easy to understand that, depending on the angular extension of each angular portion 18, the latter comprises one or more housing grooves 12. The angular portions 18 can be associated with each other by interlocking and are configured to join the respective outer surfaces flush.

For this purpose, it is of fundamental importance that the respective outer surfaces are joined flush so as to ensure that the outer rolling surface 3 does not have any irregularities that would jeopardize the operation of the wheel 1 and increase wear and the risk of wheel breakage.

It cannot however be ruled out from the scope of the present invention that the angular portions 18 are associable with each other by interposition of connection means of the type of screws or the like.

It cannot also be ruled out that the connection means comprise joining edges which are configured to allow the coupling by interlocking of the same.

In addition, the load-bearing structure 2 comprises spacing means, not shown in detail in the figures, configured to increase the radius of the wheel 1.

This allows using the wheel 1 on motor vehicles of different sizes and types and which, differently, would require the use of specific wheels.

Finally, it is specified that the load-bearing structure 2 comprises a plurality of lightening grooves 19 arranged below the outer rolling surface 3. The above mentioned lightening grooves 19 lie on the first side wall 4 and on the second side wall 5 respectively.

In actual facts, it has been ascertained that the described invention achieves the intended objects.

In particular, the fact is emphasized that the particular solution to provide a load-bearing structure made of plastic material in combination with a central reinforcement body made of metal material allows significantly increasing the resistance of the wheel to the weight force exerted by the motor vehicle.

In addition, the fact that the load-bearing structure comprises a plurality of angular portions that can be associated with each other by interlocking allows them to be replaced in the event of wear or breakage of the same, thus considerably reducing the cost of maintenance and/or replacement of the wheel. Additionally, the provision of a first and a second tyre element allows significantly reducing the wheel maintenance costs.

## Claims

1. Supporting wheel (1) for motor vehicles, comprising:
- a load-bearing structure (2) comprising an outer rolling surface (3) and two opposite side walls (4, 5) which extend on parallel planes and between which there is at least one through hole (6);
- a central reinforcement body (8) intended to be coupled to the hub (M) of a motor vehicle (9) and associated with said load-bearing structure (2); and
wherein said load-bearing structure (2) is at least partly made of plastic material, **characterized by** the fact that said central reinforcement body (8) has a cylindrical shape projecting cantilevered from one of said side walls (4, 5), said central reinforcement body (8) comprising a coupling element (13) associated with said through hole (6) and provided with a plurality of housing seats (21), each of them being intended to house a connecting element (14) for the union of said central reinforcement body (8) to said hub (M).

2. Wheel (1) according to claim 1, **characterized by** the fact that said coupling element (13) has a plurality of housing seats (21), each of them being intended to house a connecting element (14) for the union of said central reinforcement body (8) to said hub (M).

3. Wheel (1) according to one or more of the preceding claims, **characterized by** the fact that said central reinforcement body (8) comprises a hollow clamping element (15) cylindrical in shape, associated with said through hole (6) and protruding overhanging from one of said side walls (4, 5).

4. Wheel (1) according to claim 3, **characterized by** the fact that comprises a plurality of reinforcement elements (10) having an elongated shape and associated with said load-bearing structure (2) on at least one of said side walls (4, 5), said coupling element (13) abuts against said clamping element (15) and said reinforcement elements (10) being associated with said coupling element (13).

5. Wheel (1) according to one or more of the preceding claims, **characterized by** the fact that said reinforcement elements (10) are associated with said coupling element (13) by interposition of a connecting portion (17) which extends transversely to said coupling portion (13).

6. Wheel (1) according to one or more of the preceding claims, **characterized by** the fact that it comprises a first tyre element (30) associated with said outer rolling surface (3).

7. Wheel (1) according to one or more of the preceding claims, **characterized by** the fact that said first tyre element (30) is co-molded on said outer rolling surface (3).

8. Wheel (1) according to one or more of the preceding claims, **characterized by** the fact that it comprises a second tyre element (31) associated with said first tyre element (30).

9. Wheel (1) according to one or more of the preceding claims, **characterized by** the fact that said second tyre element (31) is made at least partly of a polymeric material.

10. Wheel (1) according to one or more of the preceding claims, **characterized by** the fact that said second tyre element (31) comprises a plurality of portions (22) having an elongated conformation with predefined angular extension and configured to be associated adjacent to each other by interposition of union means (23, 24) to cover said first tyre element (30).

11. Wheel (1) according to claim 10, **characterized by** the fact that said union means (23, 24) comprise at least one housing seat made on a first end (25) of said portions (22) and at least one interlocking tooth (24) associated with a second end (26) opposite said first end (25) and configured to fit in said interlocking seat (23), said union means (23, 24) being configured to join flush the respective outer surfaces of said portions (22).

12. Wheel (1) according to claim 8, **characterized by** the fact that said second tyre element (31) is associated with said first tyre element (30) by interlocking, said second tyre element (31) being shaped to abut against said first tyre element (30).

13. Wheel (1) according to one or more of the preceding claims, **characterized by** the fact that said second tyre element (31) is associated with said first tyre element (30) by interposition of adhesive means.

14. Wheel (1) according to one or more of the preceding claims, **characterized by** the fact that said load-bearing structure (2) comprises a plurality of angular portions (18) configured to be associated in a removable manner with said central reinforcement body (8).

15. Wheel (1) according to claim 14, **characterized by** the fact that said angular portions (18) are associable with each other by interlocking, said angular portions (18) being configured to join flush the respective outer surfaces.

## Patentansprüche

1. Stützrad (1) für Kraftfahrzeuge, umfassend:
- eine lasttragende Struktur (2) mit einer äußeren Rollfläche (3) und zwei gegenüberliegenden Seitenwänden (4, 5), die sich in parallelen Ebenen erstrecken und zwischen denen sich mindestens ein Durchgangsloch (6) befindet;
- einen zentralen Verstärkungskörper (8), der dazu bestimmt ist, mit der Nabe (M) eines Kraftfahrzeugs (9) verbunden zu werden, und der der lasttragenden Struktur (2) zugeordnet ist, und
wobei die lasttragende Struktur (2) zumindest teilweise aus Kunststoff besteht, **dadurch gekennzeichnet, dass** der zentrale Verstärkungskörper (8) eine zylindrische Form aufweist, die von einer der Seitenwände (4, 5) auskragend absteht, wobei der zentrale Verstärkungskörper (8) ein Kopplungselement (13) umfasst, das dem Durchgangsloch (6) zugeordnet und mit einer Vielzahl von Aufnahmesitzen (21) versehen ist, von denen jeder dazu bestimmt ist, ein Verbindungselement (14) zum Verbinden des zentralen Verstärkungskörpers (8) mit der Nabe (M) aufzunehmen.

2. Rad (1) nach Anspruch 1, **dadurch gekennzeichnet, dass** das Kopplungselement (13) eine Vielzahl von Aufnahmesitzen (21) aufweist, von denen jeder dazu bestimmt ist, ein Verbindungselement (14) für die Verbindung des zentralen Verstärkungskörpers (8) mit der Nabe (M) aufzunehmen.

3. Rad (1) nach einem oder mehreren der vorhergehenden Ansprüche, **dadurch gekennzeichnet, dass** der zentrale Verstärkungskörper (8) ein hohles Klemmelement (15) mit zylindrischer Form umfasst, das dem Durchgangsloch (6) zugeordnet ist und über eine der Seitenwände (4, 5) hervorsteht.

4. Rad (1) nach Anspruch 3, **dadurch gekennzeichnet, dass** es eine Vielzahl von Verstärkungselementen (10) umfasst, die eine längliche Form aufweisen und mit der lasttragenden Struktur (2) an mindestens einer der Seitenwände (4, 5) verbunden sind, wobei das Kopplungselement (13) an dem Klemmelement (15) anliegt und die Verstärkungselemente (10) dem Kopplungselement (13) zugeordnet sind.

5. Rad (1) nach einem oder mehreren der vorhergehenden Ansprüche, **dadurch gekennzeichnet, dass** die Verstärkungselemente (10) mit dem Kopplungselement (13) durch Zwischenschaltung eines Verbindungsabschnitts (17) verbunden sind, der sich quer zu dem Kopplungsabschnitt (13) erstreckt.

6. Rad (1) nach einem oder mehreren der vorhergehenden Ansprüche, **dadurch gekennzeichnet, dass** es ein erstes Reifenelement (30) umfasst, das der äußeren Rollfläche (3) zugeordnet ist.

7. Rad (1) nach einem oder mehreren der vorhergehenden Ansprüche, **dadurch gekennzeichnet, dass** das erste Reifenelement (30) an die äußere Rollfläche (3) angeformt ist.

8. Rad (1) nach einem oder mehreren der vorhergehenden Ansprüche, **dadurch gekennzeichnet, dass** es ein zweites Reifenelement (31) umfasst, das dem ersten Reifenelement (30) zugeordnet ist.

9. Rad (1) nach einem oder mehreren der vorhergehenden Ansprüche, **dadurch gekennzeichnet, dass** das zweite Reifenelement (31) zumindest teilweise aus einem polymeren Material besteht.

10. Rad (1) nach einem oder mehreren der vorhergehenden Ansprüche, **dadurch gekennzeichnet, dass** das zweite Reifenelement (31) eine Vielzahl von Abschnitten (22) umfasst, die eine längliche Form mit einer vordefinierten Winkelausdehnung aufweisen und ausgebildet sind, durch Zwischenschaltung von Verbindungsmitteln (23, 24) nebeneinander angeordnet zu sein, um das erste Reifenelement (30) abzudecken.

11. Rad (1) nach Anspruch 10, **dadurch gekennzeichnet, dass** die Verbindungsmittel (23, 24) mindestens einen Aufnahmesitz, der an einem ersten Ende (25) der Abschnitte (22) ausgebildet ist, und mindestens einen Verriegelungszahn (24) umfassen, der einem zweiten Ende (26) gegenüber dem ersten Ende (25) zugeordnet und ausgebildet ist, in den Verriegelungssitz (23) zu passen, wobei die Verbindungsmittel (23, 24) ausgebildet sind, mit den jeweiligen Außenflächen der Abschnitte (22) bündig zu verbinden.

12. Rad (1) nach Anspruch 8, **dadurch gekennzeichnet, dass** das zweite Reifenelement (31) dem ersten Reifenelement (30) durch Verriegelung zugeordnet ist, wobei das zweite Reifenelement (31) geformt ist, an dem ersten Reifenelement (30) anzuliegen.

13. Rad (1) nach einem oder mehreren der vorhergehenden Ansprüche, **dadurch gekennzeichnet, dass** das zweite Reifenelement (31) dem ersten Reifenelement (30) durch Zwischenschaltung von Klebemitteln zugeordnet ist.

14. Rad (1) nach einem oder mehreren der vorhergehenden Ansprüche, **dadurch gekennzeichnet, dass** die lasttragende Struktur (2) eine Vielzahl von winkelförmigen Abschnitten (18) umfasst, die ausgebildet sind, mit dem zentralen Verstärkungskörper (8) lösbar verbunden zu sein.

15. Rad (1) nach Anspruch 14, **dadurch gekennzeichnet, dass** die winkelförmigen Abschnitte (18) durch Verriegelung einander zuordnenbar sind, wobei die winkelförmigen Abschnitte (18) ausgebildet sind, mit den jeweiligen Außenflächen bündig zu verbinden.

## Revendications

1. Roue de support (1) pour véhicules à moteur, comprenant :
- une structure porteuse (2) comprenant une surface de roulement extérieure (3) et deux parois latérales opposées (4, 5) qui s'étendent sur des plans parallèles et entre lesquelles il y a au moins un trou traversant (6) ;
- un corps de renforcement central (8) destiné à être accouplé au moyeu (M) d'un véhicule à moteur (9) et associé à ladite structure porteuse (2) ; et
ladite structure porteuse (2) étant au moins partiellement faite de matière plastique,
**caractérisée par le fait que** ledit corps de renforcement central (8) a une forme cylindrique se projetant en porte-à-faux à partir d'une desdites parois latérales (4, 5), ledit corps de renforcement central (8) comprenant un élément d'accouplement (13) associé audit trou traversant (6) et comportant une pluralité de sièges de réception (21), chacun d'eux étant destiné à recevoir un élément de liaison (14) pour l'union dudit corps de renforcement central (8) audit moyeu (M).

2. Roue (1) selon la revendication 1, **caractérisée par le fait que** ledit élément d'accouplement (13) a une pluralité de sièges de réception (21), chacun d'eux étant destiné à recevoir un élément de liaison (14) pour l'union dudit corps de renforcement central (8) audit moyeu (M).

3. Roue (1) selon une ou plusieurs des revendications précédentes, **caractérisée par le fait que** ledit corps de renforcement central (8) comprend un élément de serrage creux (15) de forme cylindrique, associé audit trou traversant (6) et se projetant en surplomb à partir d'une desdites parois latérales (4, 5).

4. Roue (1) selon la revendication 3, **caractérisée par le fait qu'**elle comprend une pluralité d'éléments de renforcement (10) ayant une forme allongée et associés à ladite structure porteuse (2) sur au moins une desdites parois latérales (4, 5), ledit élément d'accouplement (13) étant en butée contre ledit élément de serrage (15) et lesdits éléments de renforcement (10) étant associés audit élément d'accouplement (13).

5. Roue (1) selon une ou plusieurs des revendications précédentes, **caractérisée par le fait que** lesdits éléments de renforcement (10) sont associés audit élément d'accouplement (13) par interposition d'une partie de liaison (17) qui s'étend transversalement à ladite partie d'accouplement (13).

6. Roue (1) selon une ou plusieurs des revendications précédentes, **caractérisée par le fait qu'**elle comprend un premier élément de pneu (30) associé à ladite surface de roulement extérieure (3).

7. Roue (1) selon une ou plusieurs des revendications précédentes, **caractérisée par le fait que** ledit premier élément de pneu (30) est co-moulé sur ladite surface de roulement extérieure (3).

8. Roue (1) selon une ou plusieurs des revendications précédentes, **caractérisée par le fait qu'**elle comprend un second élément de pneu (31) associé audit premier élément de pneu (30).

9. Roue (1) selon une ou plusieurs des revendications précédentes, **caractérisée par le fait que** ledit second élément de pneu (31) est fait au moins en partie d'un matériau polymère.

10. Roue (1) selon une ou plusieurs des revendications précédentes, **caractérisée par le fait que** ledit second élément de pneu (31) comprend une pluralité de parties (22) ayant une conformation allongée avec une extension angulaire prédéfinie et configurées pour être associées de manière adjacente les unes aux autres par interposition de moyens d'union (23, 24) pour recouvrir ledit premier élément de pneu (30).

11. Roue (1) selon la revendication 10, **caractérisée par le fait que** lesdits moyens d'union (23, 24) comprennent au moins un siège de réception réalisé sur une première extrémité (25) desdites parties (22) et au moins une dent de verrouillage réciproque (24) associée à une seconde extrémité (26) opposée à ladite première extrémité (25) et configurée pour s'emboîter dans ledit siège de verrouillage réciproque (23), lesdits moyens d'union (23, 24) étant configurés pour joindre à fleur les surfaces extérieures respectives desdites parties (22).

12. Roue (1) selon la revendication 8, **caractérisée par le fait que** ledit second élément de pneu (31) est associé audit premier élément de pneu (30) par verrouillage réciproque, ledit second élément de pneu (31) étant formé pour être en butée contre ledit premier élément de pneu (30).

13. Roue (1) selon une ou plusieurs des revendications précédentes, **caractérisée par le fait que** ledit second élément de pneu (31) est associé audit premier élément de pneu (30) par interposition de moyens adhésifs.

14. Roue (1) selon une ou plusieurs des revendications précédentes, **caractérisée par le fait que** ladite structure porteuse (2) comprend une pluralité de parties angulaires (18) configurées pour être associées d'une manière amovible audit corps de renforcement central (8) .

15. Roue (1) selon la revendication 14, **caractérisée par le fait que** lesdites parties angulaires (18) sont aptes à être associées entre elles par verrouillage réciproque, lesdites parties angulaires (18) étant configurées pour joindre à fleur les surfaces extérieures respectives.
